# EUROPÄISCHE PATENTSCHRIFT

(11) **EP 1 338 401 B1**
(45) Veröffentlichungstag und Bekanntmachung des Hinweises auf die Patenterteilung: **28.12.2005**
(21) Anmeldenummer: 03002726.2
(22) Anmeldetag: 06.02.2003
(51) Int. Cl.: B29C 47/20, B29C 47/70, B29D 23/00

(54) **Extrusionsvorrichtung für Rohre wobei die Stegprofile der Dornhalter modifiziert sind**
Extrusion die for Tubes with a modified profile of the spider legs of the mandrel
Ligne d'extrusion pour tubes avec profil d'entretrois du support de mandrin

(30) Priorität: 13.02.2002 DE 10205842
(43) Veröffentlichungstag der Anmeldung: 27.08.2003
(73) Patentinhaber: Battenfeld Extrusionstechnik GmbH, 32547 Bad Oeynhausen (DE)
(72) Erfinder: Dohmann, Heinricht, 37671 Höxter (DE); Witt, Reinhard, 32547 Bad Oeynhausen (DE)

(56) Entgegenhaltungen:
- EP-A- 0 373 115
- DE-A- 3 714 593
- US-A- 4 063 865
- US-A- 5 242 293
- PATENT ABSTRACTS OF JAPAN vol. 012, no. 078 (M-675), 11. März 1988 (1988-03-11) & JP 62 218122 A (NIPPON KOKAN KK), 25. September 1987 (1987-09-25)

## Beschreibung

Die Erfindung betrifft eine Vorrichtung zur Extrusion von Hohlkörpern, insbesondere PVC-hart, kompakt sowie geschäumte PCV-Rohre, die einen Innenkranz und einen Außenkranz aufweist, wobei die Kränze mittels Stege radial verbunden sind.

Gattungsgemäße Vorrichtungen zur Erzeugung von Rohren sind beispielsweise aus dem Prospekt der Battenfeld Extrusionstechnik GmbH "Rohrextrusionsanlagen" aus 10/2000 bekannt. Hier wird ein Doppelstegdomwerkzeug vorgeschlagen.

Grundlage dieser Werkzeuge sind die formgebenden Mittel zur Herstellung der Außen- und der Innenkontur des Rohres. Beide Mittel, die Hülse und der Dorn müssen gegen die Wandreibkräfte sowie resultierende Druckkräfte des Extrudats fixiert werden. Mit Hilfe von strömungsoptimierten Stegen, die den Dorn mit der Hülse verbinden, wird die Fixierung des Dornes sichergestellt. Aber auch bei dieser Lösung ist der Störeinfluß in der Schmelze so groß, dass nur durch eine ausreichende nachfolgende Kompression und eine Begrenzung der Steghöhe die Qualität des Rohres ausreichend ist.

Diese bekannten Doppelstegdorn-Rohrköpfe - die Verbindung zwischen Hülse und Dorn wird von zwei in Umfangsrichtung versetzten Stegen, die durch einen Mittelkranz verbunden sind, gewährleistet - bieten den Vorteil, dass der Druckaufbau in der Schmelze durch weniger erforderliche Kompressionsarbeit sowie den vergrößerten Ringspalt zwischen Hülse und Dorn geringer wird. Weiterhin wird hierdurch eine exzellente Wanddickenkontrolle bei höherer Durchsatzrate ermöglicht. Durch den Einsatz eines Doppelstegdom-Rohrkopfes entsteht keine durchgehenden Stegmarkierung und es werden bessere mechanische Eigenschaften des Rohres erzielt.

Um den Prozess zu steuern und zu regeln ist es erforderlich, durch den Doppelstegdorn Versorgungsleitungen zu führen. Nachteilig ist weiterhin, dass die Versorgungsleitungen ziemlich stark geknickt werden müssen, da die Stege zwischen den einzelnen Kränzen versetzt angeordnet sind. Es ist also erforderlich, den Versatz der beiden Stege innerhalb des Mittelkranzes mit der Versorgungsleitung zu überbrücken. Bei den bekannten Systemen ist hierfür im Mittelkranz eine Nut vorgesehen, die anschließend wieder verschlossen werden muss, damit die Versorgungsleitungen geschützt sind. Der hierfür erforderliche Fertigungs- und Montageaufwand ist gemessen am gesamten Herstellaufwand des Werkzeuges, beträchtlich. Weiterhin ist bedingt durch obige Aufwendungen die Betriebssicherheit des Werkzeuges (Ausfall der ungünstig verlegten Versorgungsleitungen) erheblich herabgesetzt.

**Aufgabe** der Erfindung ist es, eine bekannte Vorrichtung derart weiter zu entwickeln, dass auf den Mittelkranz verzichtet werden kann und die Versorgungsleitung folglich nicht geknickt werden muss.

Die **Lösung** der Aufgabe ist in Verbindung mit dem Oberbegriff des Anspruchs 1 dadurch gekennzeichnet, dass die Stege (3) in radialer Richtung verdreht und/oder versetzt angeordnet sind.

Weiterbildungsgemäß ist vorgesehen, dass die Drehachse eines Steges (3) in der Nähe der Anströmkurve (5) ist, damit zumindest keine durchgehenden Stegmarkierungen entstehen. Der Schmelzestrom trifft somit zwar in einer radialen Linie auf die Stege, die Zusammentreffstelle ist aber radial versetzt.

Durch diese Wahl der Anordnung wird es möglich, eine Bohrung (4) vom Außenkranz (1) durch mindestens einen Steg bis zum Innenkranz (2) hinein zu führen. Die Versorgungsleitungen, insbesondere Stromleitungen, können von der Außenseite des Außenkranzes (2) durch den Steg (3) bis in das Innere des Innenkranzes (1) geführt werden, ohne den Versatz der Stege zu berücksichtigen. Die Versorgungsleitung muß folglich nicht geknickt werden.

Die Drehachse der Stege nahe der Anströmkurve (5) bewirkt eine relativ große Verschiebung der Ausströmachsen in Umfangsrichtung des Werkzeuges. Ein weiteres entscheidendes Merkmal der Steggeometrie ist die, entsprechend der jeweiligen Verdrehung, Strömungsoptimierung. D.h. die Querschnittsgeometrie entlang der Drehachse verändert sich entsprechend der strömungstechnischen Anforderungen.

Die so gewählte Steggeometrie des Werkzeuges verbessert gegenüber dem Doppelstegdornwerkzeug, bedingt durch die stufenlose Verschiebung der Ausströmachsen in Umfangsrichtung das Verwischen der Stegmarkierungen im extrudierten Rohr. Durch eine geschickte Wahl der Drehachse kann konzentrisch zu dieser die Versorgungsbohrung (4) bis ins Innere der Vorrichtung eingebracht werden. Auch hier ist der Fertigungs- und Montageaufwand erheblich herab gesetzt und die nachfolgende Betriebssicherheit deutlich angehoben worden. Auf den im Doppelstegdornwerkzeug erforderlichen Mittelkranz könnte somit verzichtet werden.

Die entscheidenden Merkmale des Steges (3) sind die Verdrehung um die Drehachse bzw. der Versatz aus der radialen Achse, die Positionierung der Drehachse und das in jedem Abschnitt der Steges idealisierte Strömungsverhalten. Grundsätzlich ist es möglich, den Verlauf des Drehwinkels entlang der Drehachse beliebig zu variieren.

Vorteilhafterweise ist der Querschnitt eines Steges strömungsgünstig, beispielsweise tropfenförmig, ausgebildet, wodurch die Umströmungsbedingungen des Steges vorteilhaft beeinflusst werden.

In den Zeichnungen sind Ausführungsbeispiele der Erfindung dargestellt: Es zeigt
- Fig. 1: eine Ausführung mit verdrehten Stegen,
- Fig. 2: eine Ausführung mit spiralförmigen Stegen und
- Fig. 3: eine Ausführung mit geknickten Stegen.

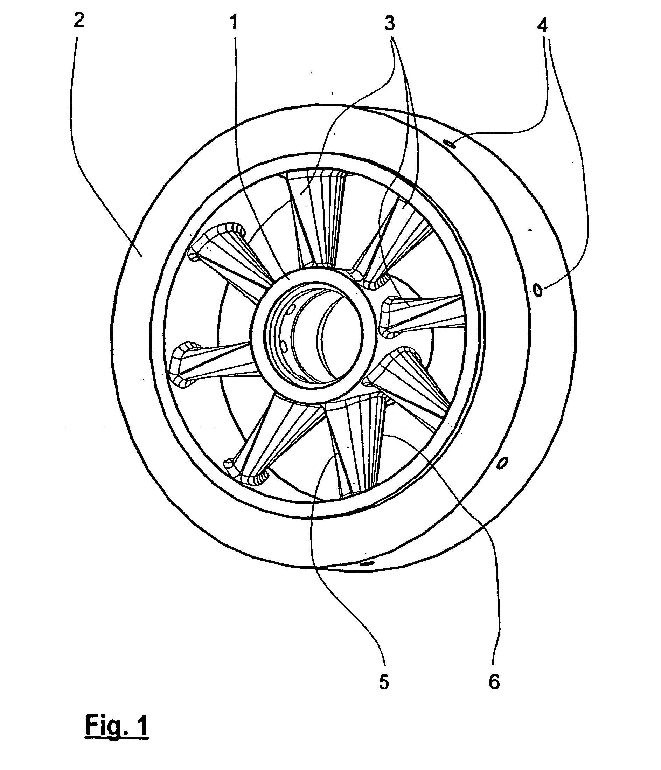

In der perspektivischen Ansicht der Figur 1 ist die Ausführung eines Dornträgers dargestellt, bei dem ein Innenkranz 1 und ein Außenkranz 2 mittels Stegen verbunden ist. Damit Versorgungsleitungen von außen in das Innere der Vorrichtung geführt werden können ist es erforderlich, eine Verbindung hierfür zu schaffen. Aus diesem Grunde ist eine Bohrung 4 vorhanden, die sich von der Außenseite des Außenkranzes 2 über einen der Stege 3 bis in den Innenkranz 1 erstreckt.

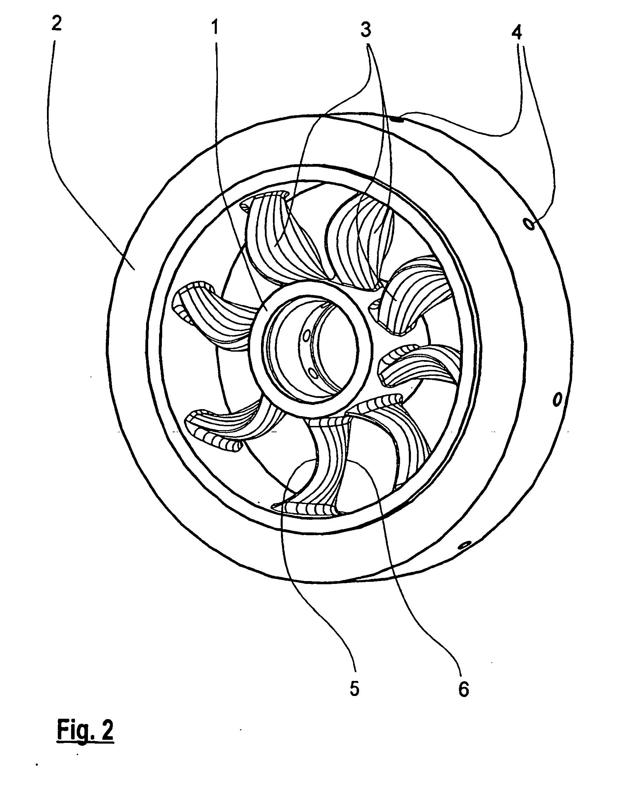

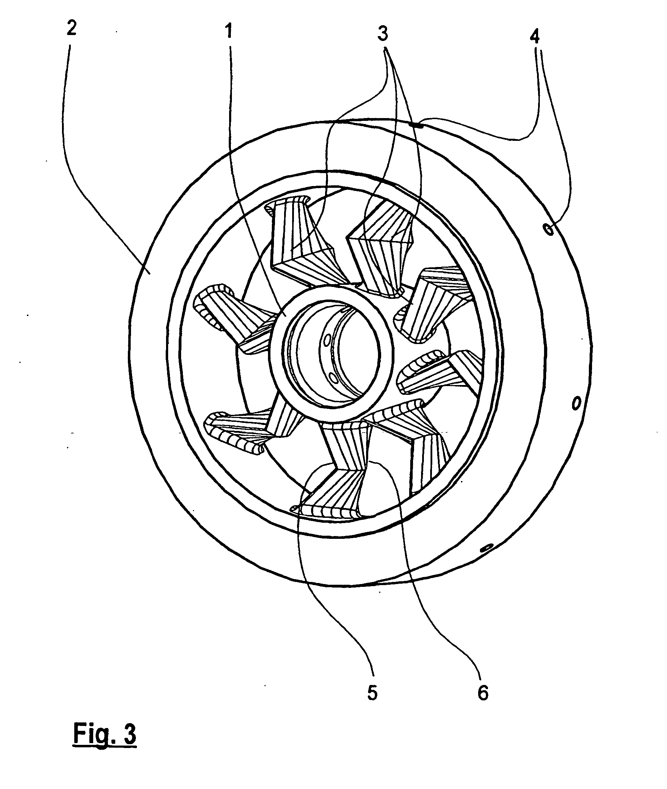

Die Stege 3 sind hierbei um eine Achse verdreht, damit die Anströmkurve 5 zur Abströmkurve 6 radial versetzt ist. Der Ausgestaltung der Stege ist durch die erfindungsgemäße Ausführung kaum Grenzen gesetzt. Die Verdrehung oder Verwindung eines Steges kann, wie in Figur 2 dargestellt, spiralförmig mit stetiger An- bzw. Abströmkurve oder wie in Figur 3 skizziert, unstetig mit einem geknickten Verlauf der An- bzw. Abströmkurve sein. Allen Ausführungen ist gemein, dass in Extrusionsrichtung die durch den Steg geteilte Schmelze hinter dem Steg so zusammen geführt wird, dass weitgehendst keine Stegmarkierungen entstehen. Die Anströmkurve 4, also der Bereich eines Steges, der die Schmelze teilt, hat einen räumlich gesehen anderen Verlauf als die Abströmkurve 5, also der Berech des Steges, hinter dem die Schmelze wieder zusammenfließt und eine Bohrung oder ein Kanal durch den Steg realisiert werden kann, um die Versorgungsleitungen von außen nach innen führen zu können ohne diese übermäßig zu beanspruchen.

Eine alternative Ausgestaltung der Vorrichtung wäre ein Versetzen der Stege in radialer Richtung. Die Anbindung eines Steges 3 am Außenkranz 2 hat eine andere radiale Achse als die Anbindung dieses Steges am Innenkranz 1. Diese Ausführung erhält allerdings ihre Grenze darin, dass der Versatz nur so groß gewählt werden kann, dass noch eine Bohrung 4 von der Außenseite des Außenkranzes 2 in das Innere des Innenkranzes 1 eingebracht werden kann.

Mit der vorgeschlagenen Vorrichtung können weitgehend alle Kunststoffteile extrudiert werden, die einen Hohlraum aufweisen, dies gilt nicht nur für Rohre, es wird hier ebenfalls an Profile wie Fensterprofile oder dergleichen gedacht.

### Bezugszeichenliste:

- 1: Innenkranz
- 2: Außenkranz
- 3: Steg
- 4: Bohrung
- 5: Anströmkurve
- 6: Abströmkurve

## Patentansprüche

1. Vorrichtung zur Extrusion von Hohlkörpern, insbesondere PVC-hart, kompakt sowie geschäumte PCV-Rohre, die einen Innenkranz (1) und
einen Außenkranz (2) aufweist,
wobei die Kränze (1, 2) mittels Stege (3) radial verbunden sind
**dadurch gekennzeichnet, dass**
die Stege (3) in radialer Richtung verdreht und/oder in radialer Richtung versetzt angeordnet sind.

2. Vorrichtung nach Anspruch 1, **dadurch gekennzeichnet, dass** die Drehachse eines Steges (3) in der Nähe der Anströmkurve (5) ist.

3. Vorrichtung nach Anspruch 1 oder 2, **dadurch gekennzeichnet, dass** sich eine Bohrung (4) vom Außenkranz (1) durch mindestens einen der Stege (3) bis zum Innenkranz (2) hin erstreckt.

4. Vorrichtung nach Anspruch 3, **dadurch gekennzeichnet, dass** die Bohrung (4) zur Aufnahme von Versorgungsleitungen, insbesondere Stromleitungen, geeignet ist.

5. Vorrichtung nach Anspruch 4, **dadurch gekennzeichnet, dass** die Stege (3) so angeordnet sind, dass die Abströmkurve (4) radial zur Anströmkurve (5) versetzt ist.

6. Vorrichtung nach mindestens einem der Ansprüche 1 bis 5, **dadurch gekennzeichnet, dass** der Querschnitt eines Steges strömungsgünstig ist.

## Claims

1. Device for the extrusion of hollow bodies, in particular PVC hard, compact and foamed PCV pipes, which has an inner ring (1) and an outer ring (2), wherein the rings (1, 2) are radially connected by means of webs (3), **characterised in that** the webs (3) are arranged to be twisted in radial direction and/or to be offset in radial direction.

2. Device according to claim 1, **characterised in that** the axis of rotation of a web (3) is in the vicinity of the incident flow curve (5).

3. Device according to claim 1 or 2, **characterised in that** a bore (4) extends from the outer ring (1) through at least one of the webs (3) as far as the inner ring (2).

4. Device according to claim 3, **characterised in that** the bore (4) is suitable for receiving supply lines, in particular power lines.

5. Device according to claim 4, **characterised in that** the webs (3) are arranged so that the outflow curve (4) is offset radially to the incident flow curve (5).

6. Device according to at least one of claims 1 to 5, **characterised in that** the cross-section of a web is favourable to flow.

## Revendications

1. Dispositif d'extrusion de corps creux, en particulier de tubes en PVC rigide, compact ou expansé, qui présente une couronne intérieure (1) et une couronne extérieure (2), les couronnes (1, 2) étant reliées radialement par des entretoises (3), **caractérisé par le fait que** les entretoises (3) sont tordues en direction radiale et/ou décalées en direction radiale.

2. Dispositif selon la revendication 1, **caractérisé par le fait que** l'axe de torsion d'une entretoise (3) est situé à proximité de la courbe d'arrivée (5).

3. Dispositif selon l'une des revendications 1 et 2, **caractérisé par le fait qu'**un trou (4) s'étend de la couronne extérieure (1) jusqu'à la couronne intérieure (2) en traversant au moins une des entretoises (3).

4. Dispositif selon la revendication 3, **caractérisé par le fait que** le trou (4) est apte à recevoir des lignes d'alimentation, en particulier des conducteurs de courant.

5. Dispositif selon la revendication 4, **caractérisé par le fait que** les entretoises (3) sont placées de façon que la courbe de départ (6) soit décalée radialement par rapport à la courbe d'arrivée (5).

6. Dispositif selon au moins une des revendications 1 à 5, **caractérisé par le fait que** la section d'une entretoise est favorable à l'écoulement.
